(19) Europäisches Patentamt

European Patent Office

Office européen des brevets

(11) **EP 0 930 323 B1**

(12) **FASCICULE DE BREVET EUROPEEN**

(45) Date de publication et mention
de la délivrance du brevet:
**21.07.2004 Bulletin 2004/30**

(51) Int Cl.7: **C08G 18/10**, C08J 9/00

(21) Numéro de dépôt: **99400077.6**

(22) Date de dépôt: **14.01.1999**

(54) **Matériau cellulaire souple, composition et procédé pour sa préparation**

Weichschaumstoff, Zusammensetzung und Verfahren zu dessen Herstellung

Soft cellular material, composition and preparation process thereof

(84) Etats contractants désignés:
**BE CH DE ES GB IT LI NL SE**

(30) Priorité: **16.01.1998 FR 9800462**

(43) Date de publication de la demande:
**21.07.1999 Bulletin 1999/29**

(73) Titulaire: **Saint-Gobain Performance Plastics Chaineux**
**4650 Chaineux (BE)**

(72) Inventeurs:
• **Ladang, Michel**
**4651 Battice (BE)**

• **Mertens, Marc**
**4900 Spa (BE)**
• **Petit, Dominique**
**4671 Blegny (BE)**

(74) Mandataire: **Cardin, Elise**
**Saint-Gobain Recherche**
**39, quai Lucien Lefranc**
**93303 Aubervilliers Cedex (FR)**

(56) Documents cités:
**DE-A- 3 942 616**     **US-A- 3 627 722**
**US-A- 3 645 924**

**Description**

La présente invention se rapporte au domaine des matériaux souples ou flexibles en polymère expansé, en particulier utilisables pour la réalisation d'éléments d'étanchéité, d'isolation et/ou d'amortissement.

Dans ce domaine, il est connu d'utiliser des matériaux synthétiques sous forme de mousse ou ayant une structure cellulaire, fabriqués en large bande ou en brin, que l'on découpe aux dimensions voulues et que l'on applique sur la surface correspondante par l'intermédiaire d'une couche adhésive. Un matériau largement utilisé de cette façon est la mousse de PVC fabriquée à partir d'un plastisol additionné d'un agent moussant.

Cette pratique devient cependant délicate lorsque la surface a une géométrie complexe. Elle peut aussi se révéler trop longue à mettre en oeuvre dans le cadre d'une production de pièces en grande série.

Pour ces applications, notamment dans l'industrie automobile ou dans des industries de fabrication d'ustensiles électriques divers, a été développée la technique de production de joint moussé in situ ou sur place (en anglais *formed in place foam gasket* ou *foamed in place gasket -FIP*) par dépose sur place d'un matériau de viscosité adaptée qui se développe en mousse en réticulant à l'air libre. L'application du matériau peut être effectuée dans une rainure, dans une forme ou sur une surface lisse dans le cas de systèmes thixotropiques ou à trois dimensions.

Une première variante de cette technique utilise, pour constituer le matériau à déposer, un système à deux composants (système dit bi-composant) qui sont stockés séparément l'un de l'autre et sont mélangés en quantités appropriées juste avant l'application grâce à des installations de dosage et de mélange sous pression réduite. Des systèmes bi-composants sont connus pour former des mousses de silicone ou de polyuréthanne. Cette technique est décrite notamment dans EP-A-0 416 229.

Une seconde variante de cette technique élimine les inconvénients liés au dosage et au mélange extemporané, en utilisant un système dit mono-composant : le matériau à déposer est préparé à l'avance et se présente sous forme stable, stockable sous atmosphère inerte jusqu'à l'utilisation.

Une composition typique adaptée à cet usage est décrite dans EP-A-0 326 704. Elle comprend un premier composant prépolymère auto-réticulable à l'eau en mélange intime avec un second composant élastomère non réticulé, de façon à constituer après extrusion et réticulation un matériau du type à réseaux de polymères interpénétrés.

Selon la viscosité du mélange et les conditions de traitement, la matière extrudée peut former la mousse spontanément ou bien le moussage peut être obtenu grâce à un agent chimique ou physique. Un exemple d'appareillage adapté pour extruder cette matière en présence d'un gaz de moussage est décrit dans US-A-4 405 063.

Bien que cette technique donne pleine satisfaction pour obtenir relativement aisément un joint moussé ayant des qualités suffisantes pour des applications à l'étanchéité, l'isolation ou autres telles que mentionnées précédemment, elle peut encore être perfectionnée pour atteindre des performances améliorées.

Un but particulier que s'est fixé la présente invention a été de proposer une composition de matières ayant une aptitude au moussage améliorée, qui permette notamment d'obtenir des produits de densité relativement basse avec des propriétés mécaniques au moins aussi bonnes que celles des produits connus.

Ces buts, ainsi que d'autres qui apparaîtront par la suite, ont été atteints en utilisant en tant que composition extrudable un produit mono-composant refermant un seul constituant macromoléculaire consistant en un prépolymère de polyuréthanne à groupes terminaux isocyanate ou trialcoxysilyle, auto-réticulable à l'humidité.

Contre toute attente, les inventeurs ont constaté qu'il est possible de former un produit moussé satisfaisant sans recourir à une structure à réseaux interpénétrés selon EP-A-0 326 704 dans laquelle le composant élastomère sert à conférer au matériau l'élasticité nécessaire pour sa résistance mécanique alors que le composant réticulable apporte le caractère thermodurcissable au matériau.

D'une part, une composition ne contenant qu'un prépolymère de polyuréthanne thermodurcissable se prête parfaitement à la technique d'extrusion en présence de gaz sous pression : il ne se pose aucun problème d'ordre rhéologique en sortie de la buse d'extrusion, et la composition forme assez rapidement et sans s'affaisser une mousse qui acquiert quasi-instantanément des caractéristiques dimensionnelles très proches des caractéristiques définitives.

D'autre part, dans les conditions optimales de fabrication, une composition ne contenant qu'un prépolymère de polyuréthanne forme une mousse de densité plus faible qu'une composition renfermant en plus au moins un autre constituant macromoléculaire. On obtient ainsi un même volume de matériau moussé avec une quantité de matière réduite. On réalise une économie de matière substantielle tout en conservant des caractéristiques mécaniques, notamment de souplesse, suffisantes pour des applications telles que les joints d'étanchéité ou d'isolation.

On parvient ainsi à réaliser des matériaux cellulaires dont la masse volumique (après réticulation) est inférieure à 300 kg/m$^3$, en particulier de l'ordre de 260 kg/m$^3$ ou moins, notamment de l'ordre de 250 kg/m$^3$ ou moins, par exemple inférieure ou égale à 200 kg/m$^3$.

Le matériau cellulaire obtenu est souple, avec avantageusement un comportement sensiblement élastique. Le matériau peut généralement avoir une rémanence à la compression à température ambiante de moins de 25 %, avantageusement de l'ordre de 15 % ou moins, en particulier inférieure ou égale à environ 10 %, par exemple de l'ordre de 5 % ou moins. Une rémanence à la compression faible témoigne d'une bonne capacité du matériau à résister à la compression. Les valeurs indiquées ci-dessus sont compatibles avec une capacité d'étanchéité durable dans les applications usuelles.

Par ailleurs, le matériau en mousse réticulé présente en général une peau lisse et une structure cellulaire relativement fine à très fine, témoins de l'aptitude du produit monocomposant à empêcher les bulles de gaz d'éclater à la surface libre de la matière extrudée tout en évitant la coalescence des bulles de gaz au sein du matériau. Ces caractéristiques rendent le matériau tout à fait adapté aux applications à l'étanchéité et/ou l'isolation.

De façon avantageuse, la structure cellulaire est telle que les cellules sont de dimension inférieure à 0,3 mm, de préférence à 0,2 mm.

Sont particulièrement avantageuses les structures renfermant des cellules de très petite dimension, par exemple de taille inférieure à 0,1 mm. Pour fixer les idées, on qualifiera de « fine » une structure dans laquelle les cellules ont des dimensions comprises entre environ 0,1 et 0,3 mm, et on qualifiera de « très fine » une structure dans laquelle les cellules ont des dimensions comprises entre environ 0,03 et 0,2 mm.

Les inventeurs ont en outre mis en évidence le fait que le moussage est d'autant plus important que le système polymère du produit monocomposant présente, à l'échelle supramoléculaire, un nombre réduit de phases. De préférence, le prépolymère de polyuréthanne formant le constituant macromoléculaire du produit monocomposant est essentiellement monophasé.

Par « essentiellement monophasé » on désigne ici un système polymère dans lequel les chaînes macromoléculaires sont essentiellement miscibles.

C'est le cas en particulier lorsque le prépolymère de polyuréthanne est un homopolymère, les chaînes macromoléculaires s'arrangeant en une seule phase parfaitement homogène. Cela peut également être le cas lorsque le prépolymère est un copolymère statistique. Cela peut encore être le cas lorsque le prépolymère est un copolymère séquencé ou greffé dans lequel les différentes séquences (dérivées d'au moins deux monomères distincts) sont miscibles entre elles, éventuellement dans un domaine de proportions relatives déterminé. De préférence, les séquences sont totalement miscibles entre elles de sorte que l'on observe par microscopie une seule phase homogène, mais elles peuvent aussi s'arranger de telle sorte que l'une (au moins) joue le rôle d'une « matrice », l'autre étant finement dispersée dans la première. Cette dernière structure, qui présente une seule phase polymère continue (la « matrice »), est couverte par la signification de « essentiellement monophasé » dans la présente invention.

A contrario, l'expression « essentiellement monophasé » telle qu'utilisée ici exclut les systèmes dans lesquels les chaînes macromoléculaires se séparent en au moins deux phases co-continues, c'est-à-dire réparties en autant de domaines macroscopiques.

En fonction des types de séquences qu'il souhaite mettre en oeuvre, l'homme du métier est à même de déterminer à l'aide de simples observations microscopiques, les fractions massiques à utiliser pour se trouver dans le domaine de miscibilité de chaînes correspondant.

Le prépolymère de polyuréthanne est un oligomère non réticulé, de préférence de poids moléculaire inférieur à 20000 g/mol, obtenu par réaction entre (i) au moins un composant de type polyol ou polyamine et (ii) au moins un composant polyisocyanate, suivie éventuellement d'une réaction de coiffage des fonctions terminales par un trialcoxysilane.

Avantageusement, le réactif (i) est choisi parmi des polyols et polyamines de fonctionnalité au moins égale à 2 ayant un squelette de type polyester, polycaprolactone, polyéther, polyoléfine, notamment copolymère EVA hydroxylé, polybutadiène saturé ou insaturé, polyisoprène, polydiméthylsiloxane.

De préférence, le squelette est de type :

- polyester aliphatique et/ou aromatique, de préférence essentiellement aliphatique, notamment dérivé de glycols aliphatiques, éventuellement le diéthylèneglycol, et d'acides aliphatiques et/ou aromatiques ; ou
- polyéther, notamment polyoxyde d'éthylène et/ou de propylène ou polytétrahydrofuranne.

Le composant polyol ou polyamine est avantageusement un oligomère de masse moléculaire inférieure ou égale à environ 10000 g/mol, de préférence de l'ordre de 500 à 4000 g/mol, en particulier de 1500 à 3500 g/mol.

Sa fonctionnalité est de préférence de l'ordre de 2 par valeur supérieure, en particulier de l'ordre de 2 à 2,5.

D'autre part, le réactif (ii) peut être choisi parmi des molécules simples, en particulier aromatiques, portant au moins deux fonctions isocyanate et des oligomères (de masse moléculaire pouvant être choisie dans les gammes indiquées ci-dessus) à groupes terminaux isocyanate de fonctionnalité au moins égale à 2.

Avantageusement, le réactif comprend au moins un composant polyisocyanate de fonctionnalité au moins égale à 2 de faible poids moléculaire choisi parmi le para-phénylène diisocyanate, le trans-1,4-cyclohexane diisocyanate, le 3-isocyanate-méthyl-3,3,5-triméthylcyclohexyl isocyanate, le naphtalène-1-5 diisocyanate, le méthylène-bis 4 phénylisocyanate (MDI pur), le MDI brut, le 2,4- toluènediisocyanate (TDI 2,4), le 2,6-toluènediisocyanate (TDI 2,6) et leurs mélanges (par exemple TDI 80/20 comprenant 80 % d'isomère 2,4 ou TDI 65/35), ainsi que le TDI brut (TDI 80/20 non purifié).

Parmi ces composants, le MDI brut ou pur est tout particulièrement préféré.

Pour le composant polyisocyanate, la fonctionnalité est de préférence de l'ordre de 2 par valeur supérieure, en particulier de l'ordre de 2 à 2,8.

En vue d'obtenir un matériau dont la matrice polymère est un système à peu de phases, il est avantageux de choisir un composant polyisocyanate à squelette non oligomère, c'est-à-dire un composant aliphatique ou aromatique de bas poids moléculaire dans lequel les groupes isocyanate ne sont pas liés à un squelette polymère.

En vue d'obtenir un système monophasé, il est tout particulièrement avantageux de faire réagir un seul type de composant polyol ou polyamine avec un composant polyisocyanate de bas poids moléculaire. Par « un seul type », on entend que les chaînes du squelette oligomère dudit composant appartiennent à une seule famille de polymère, en pouvant éventuellement combiner plusieurs membres de cette famille. Par exemple, on pourra utiliser un polyétherdiol, dans lequel les chaînes polyéther sont constituées exclusivement de polyoxyde de propylène, mais aussi éventuellement un mélange de (polyoxyde de propylène)-diol et de (polyoxyde d'éthylène)-diol.

Lorsque l'on utilise un oligomère à groupes terminaux isocyanate, on choisit de préférence sa structure chimique et/ou sa fraction massique dans le mélange, de telle sorte que les chaînes macromoléculaires des deux composants (i) et (ii) soient miscibles entre elles.

Les quantités relatives de composant (i) polyol/polyamine et de composant (ii) polyisocyanate sont choisies de façon à permettre l'obtention d'un prépolymère stable de polyuréthanne présentant des groupes terminaux isocyanate. L'excès de polyisocyanate est de préférence choisi de telle sorte que le rapport molaire des groupes isocyanates NCO aux groupes alcool OH et/ou amine $NH_2$ (NCO/OH + $NH_2$) soit de l'ordre de 2 à 3,5.

Les températures et durée de réaction sont variables en fonction des composants utilisés, leur détermination pour chaque cas particulier étant à la portée de l'homme du métier.

Un prépolymère à groupes terminaux trialcoxysilyle peut être obtenu à partir du produit de réaction des composants (i) et (ii), en soumettant ce produit à une réaction avec un agent de trialcoxysilylation. Un trialcoxysilane susceptible de réagir avec un groupe NCO peut être un trialcoxyaminosilane, par exemple un aminopropyl-trialcoxysilane tel que l'aminopropyl triméthoxysilane; ou encore un trialcoxymercaptosilane.

Les prépolymères terminés par des isocyanates sont néanmoins préférés dans la mesure où leur autoréticulation en présence d'eau est beaucoup plus rapide.

Le matériau cellulaire selon l'invention peut être exclusivement constitué de polyuréthanne, mais sa matrice polymère peut aussi être chargée. Par charge, on entend ici de façon générale un produit ni soluble ni miscible dans la matrice polymère, dispersible dans cette dernière, qui permet d'améliorer une ou plusieurs propriétés ou caractéristiques (propriétés mécaniques, chimiques, couleur, coût de production) du mélange final.

A cet effet, le produit monocomposant extrudable peut renfermer en outre une charge particulaire ou pulvérulente, organique ou minérale, par exemple du carbonate de calcium et/ou du noir de carbone.

Le produit monocomposant peut renfermer également des additifs conventionnels, tels que plastifiant, colorant, stabilisant, régulateur de cellules, catalyseurs...

L'invention a également pour objet une composition stable, extrudable en présence de gaz sous pression pour former un matériau cellulaire souple ayant une matrice polymère expansée, cette composition renfermant un constituant macromoléculaire, caractérisé en ce que le constituant macromoléculaire est un prépolymère de polyuréthanne à groupes terminaux isocyanate ou trialcoxysilyle, auto-réticulable à l'humidité.

Ce type de composition a généralement une viscosité assez faible, qui peut notamment être inférieure à 500 Pa.s à moins de 60°C, ce qui facilite considérablement la mise en forme par extrusion.

Elle est stable au stockage sous atmosphère sèche.

L'invention a aussi pour objet un procédé de fabrication d'un matériau cellulaire tel que décrit ci-dessus. Ce procédé comprend les étapes consistant à :

- préparer un produit monocomposant de la composition ci-dessus,
- éventuellement, stocker le produit mono-composant à l'abri de l'humidité, notamment sous atmosphère sèche ou sous vide,
- mélanger le produit avec un gaz sous pression pour former une matière extrudable,
- extruder une quantité de matière extrudable,
- réticuler la matière extrudée dans une atmosphère humide.

De préférence, le matériau cellulaire selon l'invention est fabriqué sous forme du ruban, de plaque, de brin ou de tube pour joint d'étanchéité. Il peut être produit par extrusion directe sur la surface prévue pour son application, ou bien par extrusion dans un moule portant l'empreinte négative de la surface en question puis transfert sur cette surface.

Par extrusion, on entend ici au sens large une technique dans laquelle on achemine une matière à l'état fluide ou visqueux jusqu'à un orifice d'application que nous nommons buse. Ce terme ne limite pas l'invention à une technique de conformation de ladite matière, celle-ci étant libre d'adopter à la sortie de l'orifice des dimensions sensiblement différentes de celles de la section de la buse.

Le gaz peut être de préférence de l'azote mais aussi tout autre gaz connu à cet effet : air, dioxyde de carbone, n-pentane,...

Le traitement de réticulation humide peut être effectué dans les conditions connues de l'homme de l'art, par exemple dans une plage de température allant de la température ambiante à environ 80°C, dans une atmosphère ayant une humidité relative de l'ordre de 40 à 100 %.

La réticulation peut s'accompagner d'un gonflement du matériau dû au dégagement de $CO_2$ par la réaction de réticulation des groupes isocyanate libres avec l'eau.

De façon générale, une humidité relative élevée favorise un gonflement important.

D'autres avantages et particularités de l'invention ressortiront des exemples détaillés qui vont suivre, ainsi que des dessins annexés, sur lesquels :

- La **figure 1** : illustre schématiquement la structure observée au microscope optique d'un premier produit mono-composant avant mise en forme selon l'invention ;
- La **figure 2** : illustre schématiquement la structure observée au microscope optique d'un deuxième produit mono-composant avant mise en forme selon l'invention.

## EXEMPLE 1

Préparation du produit mono-composant

On prépare un prépolymère de polyuréthanne en faisant réagir un polyester diol 1 avec du méthylène-bis 4-phényl isocyanate (MDI). Le polyester diol utilisé est commercialisé sous la marque DYNACOLL® par la société HULS; il se caractérise par un nombre OH d'environ 31,2 (exprimé en mg de KOH par gramme de produit) et une masse moléculaire d'environ 3500 g/mol. Le MDI utilisé est du MDI brut ayant une fonctionnalité de 2,7 et un taux de groupements isocyanate NCO de 31% (en % en poids d'équivalents NCO par gramme de produit).

11,5 kg de Dynacoll sont placés dans un mélangeur avec balayage de la surface par de l'air sec et chauffés à une température de 80°C environ avec ajout éventuel d'un stabilisant.

On ajoute ensuite 2,7 kg de MDI, de sorte que le rapport NCO/OH initial est de l'ordre de 3,2, et l'on homogénéise le mélange sous agitation moyenne.

On suit l'avancement de la réaction en mesurant périodiquement la teneur en groupements isocyanate résiduels dans des échantillons de mélange réactionnel prélevés à intervalles réguliers. Le dosage des NCO est effectué par titrage en retour d'une solution de n-butyl amine (0,5 M) par une solution d'acide chlorhydrique (0,5 M).

Lorsque le pourcentage NCO théorique est atteint, on ajoute un catalyseur de type amine à raison d'environ 0,05 % en poids du produit, et éventuellement un colorant tel que du noir de carbone. Après homogénéisation sous forte agitation, le produit est conditionné rapidement sous atmosphère sèche. Il peut être stocké sous cette forme pendant une durée de 6 mois à température ambiante dans des récipients (tels que des fûts) fermés de façon étanche.

On procède à une observation au microscope optique pour vérifier le nombre de phase du système polymère formé. On constate que le prépolymère est monophasé, en conséquence de l'utilisation d'un seul type de diol et d'un polyisocyanate non oligomère.

Fabrication d'un matériau cellulaire

Le produit mono-composant préparé ci-dessus a été extrudé en présence d'azote sous pression dans une machine de moussage du type décrit dans EP-A-0 654 297, comportant :

- une réserve de produit thermoplastique et des moyens de chauffage dudit produit à sa température de plasticité,
- un dispositif mixeur muni d'un conduit d'amenée de produit visqueux et d'un conduit d'amenée d'azote sous pression, et
- un conduit d'amenée de matière extrudable équipé d'une buse d'extrusion.

Sous l'effet de la température et de la pression dans l'enceinte du dispositif mixeur, l'azote se dissout dans le produit mono-composant. A la sortie de la buse d'extrusion, la matière est exposée à la pression atmosphérique, provoquant la libération de l'azote par détente avec formation de bulles de gaz qui expansent le polymère.

Les conditions d'extrusion étaient adaptées pour former un brin extrudé d'environ 6 mm de diamètre. De préférence, la buse est chauffée de façon à maintenir la viscosité de la matière à une valeur souhaitée en sortie du canal d'extrusion.

Avec le produit monocomposant de l'exemple 1, on observe un moussage instantané en sortie de buse, témoignant de l'excellente aptitude du produit à s'expanser suivant cette technique. Le brin extrudé présente en outre une grande stabilité dimensionnelle à l'état non réticulé : on n'observe pas d'affaissement ni autre déformation notable, ce qui montre que la composition de la matière extrudée a, malgré l'absence d'un élastomère tel qu'utilisé jusqu'à présent, des propriétés rhéologiques satisfaisantes.

L'opération d'extrusion est suivie d'une étape de réticulation humide du brin extrudé dans deux types de conditions : à température ambiante et humidité relative de l'ordre de 50 à 60 % (conditions RT), ou bien dans une atmosphère chaude, par exemple à une température d'environ 55°C et humidité relative de l'ordre de 85% (conditions HHB).

Caractérisation du matériau cellulaire

Après réticulation, on mesure la densité du brin par une méthode connue en soi. Elle est de 210 kg/m$^3$ pour la réticulation dans les conditions RT et de 200 kg/m$^3$ pour la réticulation dans les conditions HHB.

On procède également à une observation au microscope optique pour qualifier la structure cellulaire du brin moussé. On mesure le diamètre moyen des bulles les plus petites et des bulles les plus grosses. La structure cellulaire est qualifiée selon l'échelle suivante :

Tableau 1

| Désignation | Dimensions extrêmes des cellules (mm) |
|---|---|
| FF | $0,03 \rightarrow 0,2$ |
| F | $0,1 \rightarrow 0,3$ |
| M | $0,15 \rightarrow 0,5$ |
| G | $0,17 \rightarrow 1,7$ |
| GG | $0,8 \rightarrow 2$ |

On constate que le brin de l'exemple 1 a une structure cellulaire très fine (FF).

On mesure d'autre part la rémanence à la compression (*Cset*) de la façon suivante : à l'aide d'un pied à coulisse digital, on mesure l'épaisseur $E_0$ d'un échantillon de brin après réticulation. On comprime l'échantillon de 25% dans le sens de l'épaisseur, jusqu'à une épaisseur $E_i = 0,75 \times E_0$. La compression est maintenue constante pendant 22 heures à une température de $70 \pm 2°C$, puis on libère l'échantillon et on le laisse reposer pendant 24 heures à la température ambiante. On mesure alors l'épaisseur finale $E_F$ de l'échantillon. La rémanence à la compression du brin est donnée par la relation suivante :

$$Cset(en\%) = \frac{E_0 - E_F}{E_0 - E_i} \times 100$$

La température élevée permet d'obtenir en 22 heures une valeur significative d'une compression à température ambiante pendant une durée qui s'exprimerait en semaines.

On mesure Cset = 15 %.

**EXEMPLE 2**

On prépare un autre produit monocomposant en faisant réagir un autre polyester diol avec le MDI. Ce polyester diol 2 est désigné sous le nom de B-ester commercialisé par la société POLYOLCHIMICA ; il est caractérisé par un nombre OH de 29,7 et une masse moléculaire de l'ordre de 3500 g/mol.

On fait réagir, dans les mêmes conditions qu'à l'exemple 1, 13,2 kg de B-ester avec 3,04 kg de MDI, de sorte que le rapport NCO/OH soit de l'ordre de 3,2.

Le système polymère formé est monophasé, puisque l'on a utilisé qu'un seul type de diol. Ce produit est extrudé en un brin moussé comme décrit dans l'exemple 1.

**EXEMPLE 3**

On prépare un autre produit monocomposant en faisant réagir cette fois un polyéther diol avec du MDI. Le polyéther diol utilisé est commercialisé sous la marque LUPRANOL® par la société BASF ; il est caractérisé par un nombre OH de 56 et une masse moléculaire de l'ordre de 2000 g/mol.

On fait réagir, dans des conditions similaires à celles de l'exemple 1, 14,1 kg de Lupranol avec 5,14 kg de MDI, de sorte que le rapport NCO/OH soit de l'ordre de 2,7.

Le système polymère formé est monophasé, puisque l'on a utilisé qu'un seul type de diol. Ce produit est extrudé en un brin moussé comme décrit dans l'exemple 1.

### EXEMPLE 4

On prépare un autre produit monocomposant en faisant réagir cette fois le polyester diol 2 (B-ester) avec du MDI pur. Le MDI pur est caractérisé par une fonctionnalité exactement égale à 2 et un taux de NCO de 11,7 %.

On fait réagir, dans des conditions similaires à celles de l'exemple 1, 14 kg de B-ester avec 2,96 kg de MDI, de sorte que le rapport NCO/OH soit de l'ordre de 3,2.

Le système polymère formé est monophasé, puisque l'on a utilisé qu'un seul type de diol. Ce produit est extrudé en un brin moussé comme décrit dans l'exemple 1.

### EXEMPLE 5

On prépare un autre produit monocomposant en faisant réagir le polyester diol 2 (B-ester) chargé de carbonate de calcium avec du MDI brut.

On fait réagir, dans des conditions similaires à celles de l'exemple 1, 13 kg de B-ester mélangé à 1,4 kg de carbonate de calcium, avec 3 kg de MDI brut, de sorte que le rapport NCO/OH soit de l'ordre de 3,2.

Le système polymère formé est monophasé, puisque l'on a utilisé qu'un seul type de diol. Ce produit est extrudé en un brin moussé comme décrit dans l'exemple 1.

### EXEMPLE 6

On prépare un autre produit monocomposant en faisant réagir un mélange de deux polyester diol (1 et 2) avec du MDI.

On fait réagir, dans des conditions similaires à celles de l'exemple 1, un mélange de 7 kg de B-ester et de 7 kg de Dynacoll avec 3,29 kg de MDI brut, de sorte que le rapport NCO/OH soit de l'ordre de 3,2.

Bien que les deux diols utilisés ne soient pas miscibles à l'état de diols, les chaînes polyester se retrouvent miscibles et forment une seule phase homogène dans le prépolymère ainsi obtenu.

Ce produit est extrudé en un brin moussé comme décrit dans l'exemple 1.

### EXEMPLE 7

On prépare un autre produit monocomposant en faisant réagir un mélange de polyéther diol et de polyester diol 2 (rapport massique 20/80) avec du MDI.

On fait réagir, dans des conditions similaires à celles de l'exemple 1, un mélange de 2,49 kg de Lupranol et de 10 kg de B-ester avec 3,16 kg de MDI brut, de sorte que le rapport NCO/OH soit de l'ordre de 3.

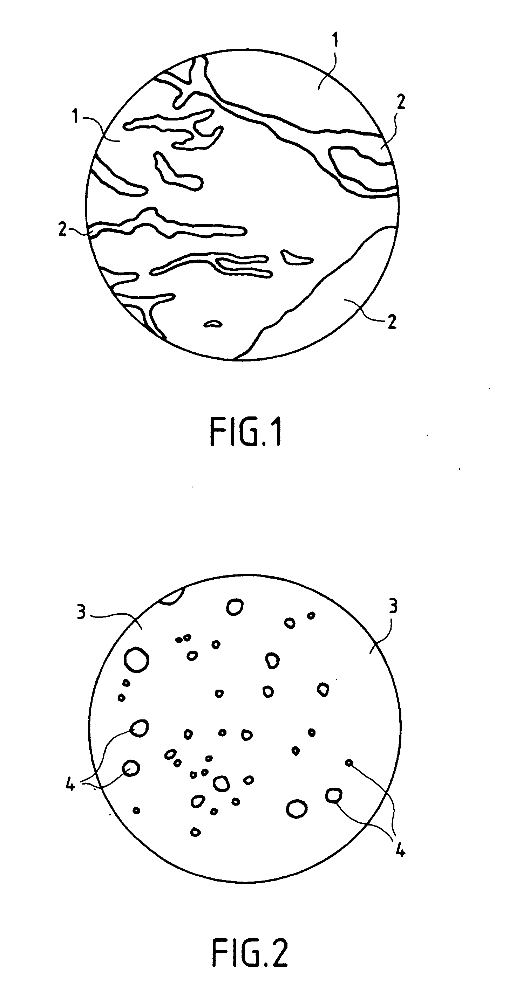

Les deux diols utilisés sont ici de types différents (ester/éther). Dans les proportions choisies, les chaînes polyester et polyéther ne sont pas miscibles dans le prépolymère, et s'organisent en deux phases macroscopiques co-continues. Cette structure est illustrée sur la figure 1, où les deux phases co-continues sont désignées par les références 1 et 2.

Ce produit est extrudé en un brin moussé comme décrit dans l'exemple 1.

### EXEMPLE 8

On prépare un autre produit monocomposant en faisant réagir un mélange de polyéther diol et de polyester diol 2 (rapport massique 80/20) avec du MDI.

On fait réagir, dans des conditions similaires à celles de l'exemple 1, un mélange de 10,2 kg de Lupranol et de 2,5 kg de B-ester avec 4,28 kg de MDI brut, de sorte que le rapport NCO/OH soit de l'ordre de 2,75.

Ici encore, les deux diols sont de types différents, mais ils sont utilisés en des proportions telles que les chaînes polyester et polyéther apparaissent comme miscibles dans le prépolymère. La structure observée est représentée schématiquement sur la figure 2 : elle est constituée d'une phase continué 3 au sein de laquelle on distingue des inclusions 4 en forme de fines goutelettes dispersées. (La figure 2 correspond à une observation du prépolymère au microscope optique avec le même facteur de grossissement qu'à la figure 1).

Cette structure correspond à la définition d'un système polymère essentiellement (ou globalement) monophasé donnée dans la présente demande. Ce produit est extrudé en un brin moussé comme décrit dans l'exemple 1.

### EXEMPLE 9

On prépare un autre produit monocomposant en faisant réagir un mélange de polyéther diol et de polyester diol 2 (rapport massique 50/50) avec du MDI.

On fait réagir, dans des conditions similaires à celles de l'exemple 1, un mélange de 6,88 kg de Lupranol et de 6,88 kg de B-ester avec 4,1 kg de MDI brut, de sorte que le rapport NCO/OH soit de l'ordre de 2,8.

Comme à l'exemple 7, les deux diols sont utilisés ici en des proportions telles que les chaînes polyester et polyéther ne se trouvent pas miscibles dans le prépolymère.

Ce produit est extrudé en un brin moussé comme décrit dans l'exemple 1.

### EXEMPLE 10

On prépare un autre produit monocomposant en faisant réagir du polyéther diol avec un polyisocyanate à squelette polyéther. Il s'agit d'un prépolymère de polyéther ayant des groupes terminaux isocyanate commercialisé sous la marque LUPRANAT ® MP 130 par la société BASF, caractérisé par un taux de NCO d'environ 12 %, une masse moléculaire de 770 et une fonctionnalité isocyanate de 2,2.

On fait réagir, dans des conditions similaires à celles de l'exemple 1, 8,5 kg de Lupranol avec 8,22 kg d'isocyanate polyéther, de sorte que le rapport NCO/OH soit de l'ordre de 3,2.

Le polyisocyanate oligomère ayant un squelette polyéther, les chaînes oligomères des composants polyol et polyisocyanate sont compatibles et forment un produit prépolymère monophasé. Ce produit est extrudé en un brin moussé comme décrit dans l'exemple 1.

### EXEMPLE 11

On prépare un autre produit monocomposant en faisant réagir du polyester diol 2 avec l'isocyanate polyéther de l'exemple précédent.

On fait réagir, dans les mêmes conditions qu'à l'exemple 1, 10,5 kg de B-ester avec 6,38 kg d'isocyanate polyéther, de sorte que le rapport NCO/OH soit de l'ordre de 3,2. Le système obtenu fait apparaître deux phases à l'observation optique.

Ce produit est extrudé en un brin moussé comme décrit dans l'exemple 1.

### EXEMPLE 12

On prépare un autre produit monocomposant en faisant réagir un autre polyester diol 1 avec l'isocyanate polyéther de l'exemple 11.

On fait réagir, dans les mêmes conditions qu'à l'exemple 1, 10 kg de Dynacoll avec 6,39 kg d'isocyanate polyéther, de sorte que le rapport NCO/OH soit de l'ordre de 3,2. Le système obtenu fait apparaître deux phases à l'observation optique.

Ce produit est extrudé en un brin moussé comme décrit dans l'exemple 1.

### EXEMPLE 13

On prépare un autre produit monocomposant en faisant réagir un composant polyol oligomère de polyisoprène avec du MDI.

On fait réagir 14 kg de polyisoprène diol commercialisé par la Société ATO, caractérisé par un nombre OH de 32 et une fonctionnalité de 2,1, avec 3,7 kg de MDI pur, de sorte que le rapport NCO/OH soit de l'ordre de 2,45.

Ce produit est extrudé en un brin moussé comme décrit dans l'exemple 1.

### EXEMPLE COMPARATIF 1

On prépare un produit monocomposant selon l'art antérieur connu de EP-A-0 326 704 à base d'un mélange de

(a) un prépolymère de polyuréthanne obtenu par réaction d'un polyesterdiol de type Dynacoll avec un prépolymère de polyéther ayant des groupes terminaux isocyanate ; et
(b) un élastomère styrène-butadiène-styrène.

Le système polymère obtenu forme quatre phases ou domaines macroscopiques différents dont deux correspondent à l'élastomère SBS. Ce produit est extrudé en un brin moussé comme décrit dans l'exemple 1.

Les caractéristiques des matériaux des exemples 1 à 13 et de l'exemple comparatif 1 sont rassemblées dans le tableau 2 ci-dessous, dans lequel on a qualifié également la rapidité du moussage en sortie de la buse d'extrusion avec les grades suivants :

I       instantané
R       rapide
L       lent

Les résultats exposés dans le tableau 2 montrent que, pour un type donné de chaîne oligomère, le moussage est d'autant meilleur (faible densité et/ou structure cellulaire fine) que le nombre de phases est réduit.

Plus particulièrement, les structures cellulaires les plus fines sont obtenues pour des systèmes monophasés, les systèmes comportant une phase homogène faite d'un premier type de chaine polymère avec un autre type de chaine polymère formant de fines inclusions étant de ce point de vue moins préférés.

Les exemples qui précèdent décrivent des compositions de systèmes particuliers réticulant par des groupes isocyanate. L'invention n'est nullement limitée à ces modes particuliers de réalisation, et d'autres matériaux peuvent être préparés à partir de produits monocomposants formulés spécifiquement sur la base de l'enseignement de la description générale de l'invention en vue d'obtenir des propriétés adaptées à chaque application particulière.

**Tableau 2**

| Exemple | Composant polyol | Composant polyisocyanate | Type de moussage | Nombre de phases organiques | Densité RT (kg/m³) | Densité HHB (kg/m³) | Structure cellulaire | Rémanence à la compression Cset (%) à 70°C |
|---|---|---|---|---|---|---|---|---|
| 1 | polyesterdiol 1 | MDI brut | I | 1 | 210 | 200 | FF | 15 |
| 2 | polyesterdiol 2 | MDI brut | I | 1 | 220 | 200 | FF | 15 |
| 3 | polyétherdiol | MDI brut | - | 1 | 270 | 220 | F | 9 |
| 4 | polyesterdiol 2 | MDI pur | I | 1 | - | 145 | M | 45 |
| 5 | polyesterdiol 2 + CaCO₃ | MDI brut | R | 1 | 230 | 200 | FF | - |
| 6 | polyesterdiol 1+2 | MDI brut | I | 1 | 240 | 200 | FF | 11 |
| 7 | polyétherdiol + polyesterdiol 2 | MDI brut | L | 2 | 255 | 235 | GG | - |
| 8 | polyétherdiol + polyesterdiol 2 | MDI brut | R | ≅1 | 205 | 190 | M | 7 |
| 9 | polyétherdiol + polyesterdiol 2 | MDI brut | - | 2 | 420 | 390 | G | - |
| 10 | polyétherdiol | isocyanate polyéther | L | 1 | - | 250 | M | - |
| 11 | polyesterdiol 2 | isocyanate polyéther | L | 2 | - | 245 | GG | - |
| 12 | polyesterdiol 1 | isocyanate polyéther | L | 2 | - | 170 | G | - |
| 13 | polyisoprène | MDI pur | - | 1 | 340 | 295 | G | |
| Comp. 1 | élastomère SBS + polyesterdiol/ | isocyanate polyéther | - | 4 | 370 | - | G | - |

**Revendications**

1. Matériau cellulaire souple ayant une matrice polymère expansée, obtenu par extrusion d'un produit monocomposant refermant un constituant macromoléculaire en présence de gaz sous pression, **caractérisé en ce que** le constituant macromoléculaire est un prépolymère de polyuréthanne à groupes terminaux isocyanate ou trialcoxysilyle, auto-réticulable à l'humidité.

2. Matériau cellulaire selon la revendication 1, **caractérisé en ce qu'**il a une masse volumique inférieure ou égale à 260 kg/m$^3$, notamment à 200 kg/m$^3$.

3. Matériau cellulaire selon la revendication 1 ou 2, **caractérisé en ce qu'**il présente une rémanence à la compression de moins de 25 %.

4. Matériau cellulaire selon l'une quelconque des revendications 1 à 3, **caractérisé en ce qu'**il présente une structure cellulaire dans laquelle les cellules sont de dimension inférieure à 0,3 mm, de préférence inférieure à 0,2 mm, en particulier avec une proportion non-nulle de cellules de taille inférieure à 0,1 mm.

5. Matériau cellulaire selon l'une quelconque des revendications 1 à 4, **caractérisé en ce que** le prépolymère est essentiellement monophasé.

6. Matériau cellulaire selon la revendication 5, **caractérisé en ce que** le prépolymère est un homopolymère.

7. Matériau cellulaire selon la revendication 5, **caractérisé en ce que** le prépolymère est un copolymère statistique, un copolymère séquencé ou greffé dans lequel les différentes séquences sont miscibles entre elles.

8. Matériau cellulaire selon l'une quelconque des revendications 1 à 7, **caractérisé en ce que** le prépolymère est un oligomère non réticulé obtenu par réaction entre :

    (i) au moins un composant choisi parmi des polyols et polyamines de fonctionnalité au moins égale à 2 ayant un squelette de type polyester, polycaprolactone, polyéther, polyoléfine, polybutadiène, polyisoprène, polydiméthylsiloxane ; et
    (ii) au moins un composant polyisocyanate de fonctionnalité au moins égale à 2 choisi parmi le para-phénylène diisocyanate, le trans-1,4-cyclohexane diisocyanate, le 3-isocyanate-méthyl-3,3,5-triméthylcyclohexyl isocyanate, le naphtalène-1,5 diisocyanate, le méthylène-bis 4 phénylisocyanate (MDI pur), le MDI brut, le 2,4 toluènediisocyanate (TDI 2,4), le 2,6-toluènediisocyanate (TDI 2,6) et leurs mélanges, ainsi que le TDI brut, et des oligomères à groupes terminaux isocyanate.

9. Matériau cellulaire selon la revendication 8, **caractérisé en ce que** le composant polyol et/ou polyamine a une masse moléculaire inférieure ou égale à 10000, de préférence de l'ordre de 500 à 4000 g/mol.

10. Matériau cellulaire selon la revendication 8 ou 9, **caractérisé en ce que** le prépolymère est obtenu par réaction d'un seul type de composant polyol ou polyamine avec un composant polyisocyanate à squelette non oligomère.

11. Matériau cellulaire selon l'une quelconque des revendications 8 à 10, **caractérisé en ce que** les composants (i) et (ii) réagissent dans un rapport molaire NCO/(OH+NH$_2$) de l'ordre de 2 à 3,5.

12. Matériau cellulaire selon l'une quelconque des revendications 8 à 11, **caractérisé en ce que** l'oligomère obtenu par réaction entre (i) et (ii) est modifié par réaction avec un agent de trialcoxysilylation.

13. Matériau cellulaire selon l'une quelconque des revendications précédentes, **caractérisé en ce que** le produit renferme en outre une charge particulaire ou pulvérulente, notamment du carbonate de calcium et/ou du noir de carbone.

14. Matériau cellulaire selon l'une quelconque des revendications précédentes, **caractérisé en ce qu'**il est sous forme de ruban, de plaque, de brin ou de tube pour joint d'étanchéité.

15. Composition stable, extrudable en présence de gaz sous pression pour former un matériau cellulaire souple ayant une matrice polymère expansée, cette composition renfermant un constituant macromoléculaire, **caractérisé en**

**ce que** le constituant macromoléculaire est un prépolymère de polyuréthanne à groupes terminaux isocyanate ou trialcoxysilyle, auto-réticulable à l'humidité.

16. Procédé de fabrication d'un matériau cellulaire souple selon l'une quelconque des revendications 1 à 14, **caractérisé en ce qu'**il comprend les étapes consistant à :

- préparer le produit monocomposant renfermant un constituant macromoléculaire,
- éventuellement, stocker le produit monocomposant à l'abri de l'humidité,
- mélanger le produit avec un gaz sous pression pour former une matière extrudable,
- extruder une quantité de matière extrudable, et
- réticuler la matière extrudée dans une atmosphère humide.

## Patentansprüche

1. Zelliges Material, das nachgiebig ist, eine expandierte Polymermatrix besitzt und durch Extrudieren eines einen makromolekularen Bestandteil umfassenden Einkomponentenprodukts in Gegenwart eines Druckgases erhalten ist, **dadurch gekennzeichnet, dass** der makromolekulare Bestandteil ein mit Feuchtigkeit selbstvernetzbares Polyurethanpräpolymer mit endständigen Isocyanat- oder Trialkoxysilylgruppen ist.

2. Zelliges Material nach Anspruch 1, **dadurch gekennzeichnet, dass** seine Dichte gleich oder weniger als 260 kg/m$^3$ und insbesondere als 200 kg/m$^3$ beträgt.

3. Zelliges Material nach Anspruch 1 oder 2, **dadurch gekennzeichnet, dass** sein Komprimierungsrest weniger als 25 % beträgt.

4. Zelliges Material nach einem der Ansprüche 1 bis 3, **dadurch gekennzeichnet, dass** es eine Zellstruktur besitzt, in welcher die Abmessungen der Zellen weniger als 0,3 mm und vorzugsweise weniger als 0,2 mm betragen und insbesondere der Anteil der Zellen mit einer Größe von kleiner als 0,1 mm ungleich Null ist.

5. Zelliges Material nach einem der Ansprüche 1 bis 4, **dadurch gekennzeichnet, dass** das Präpolymer im Wesentlichen einphasig vorliegt.

6. Zelliges Material nach Anspruch 5, **dadurch gekennzeichnet, dass** das Präpolymer ein Homopolymer ist.

7. Zelliges Material nach Anspruch 5, **dadurch gekennzeichnet, dass** das Präpolymer ein statistisches Copolymer, ein Sequenz- oder ein Pfropfcopolymer ist, in welchem die verschiedenen Sequenzen miteinander mischbar sind.

8. Zelliges Material nach einem der Ansprüche 1 bis 7, **dadurch gekennzeichnet, dass** das Präpolymer ein nicht vernetztes Oligomer ist, das durch Umsetzung

I) mindestens einer Komponente, die aus Polyolen und Polyaminen mit einer Funktionalität von mindestens 2, die ein Polyester-, Polycaprolacton-, Polyether-, Polyolefin-, Polybutadien-, Polyisopren- und Polydimethylsiloxangrundgerüst besitzen, ausgewählt ist, mit

II) mindestens einer Polyisocyanatkomponente mit einer Funktionalität von mindestens 2, die aus p-Phenylendiisocyanat, *trans*-1,4-Cyclohexandiisocyanat, 3-Isocyanatomethyl-3,3,5-trimethylcyclohexylisocyanat, Naphthalin-1,5-diisocyanat, Methylen-bis-4-phenylisocyanat (reines MDI), rohem MDI, 2,4-Toluoldiisocyanat (2,4-TDI), 2,6-Toluoldiisocyanat (2,6-TDI), ihren Gemischen, rohem TDI und Oligomeren mit endständigen Isocyanatgruppen ausgewählt ist,

erhalten worden ist.

9. Zelliges Material nach Anspruch 8, **dadurch gekennzeichnet, dass** die Molmasse der Polyol- und/oder Polyaminkomponente weniger als oder gleich 10 000 und vorzugsweise etwa 500 bis 4000 g/mol beträgt.

10. Zelliges Material nach Anspruch 8 oder 9, **dadurch gekennzeichnet, dass** das Präpolymer durch Umsetzung eines einzigen Typs einer Polyol- oder Polyaminkomponente mit einer Polyisocyanatkomponente mit einem nicht-oligomeren Grundgerüst erhalten worden ist.

11. Zelliges Material nach einem der Ansprüche 8 bis 10, **dadurch gekennzeichnet, dass** die Komponenten I) und II) in einem Molverhältnis von NCO/(OH + NH$_2$) von etwa 2 bis 3,5 reagieren.

12. Zelliges Material nach einem der Ansprüche 8 bis 11, **dadurch gekennzeichnet, dass** das durch die Umsetzung von I) mit II) erhaltene Oligomer durch Reaktion mit einem Trialkoxysilylierungsmittel modifiziert worden ist.

13. Zelliges Material nach einem der vorhergehenden Ansprüche, **dadurch gekennzeichnet, dass** das Erzeugnis außerdem eine teilchenförmige oder pulverförmige Füllung, insbesondere aus Calciumcarbonat und/oder Ruß, enthält.

14. Zelliges Material nach einem der vorhergehenden Ansprüche, **dadurch gekennzeichnet, dass** es in Form eines Bandes, einer Platte, einer Schnur oder eines Schlauchs für eine Dichtung vorliegt.

15. Zusammensetzung, die stabil und, um ein nachgiebiges zelliges Material mit einer expandierten Polymermatrix zu bilden, in Gegenwart eines Druckgases extrudierbar ist und einen makromolekularen Bestandteil umfasst, **dadurch gekennzeichnet, dass** der makromolekulare Bestandteil ein Präpolymer aus einem mit Wasser selbstvernetzbaren Polyurethan mit endständigen Isocyanat- oder Trialkoxysilylgruppen ist.

16. Verfahren zur Herstellung eines nachgiebigen zelligen Materials nach einem der Ansprüche 1 bis 14, **dadurch gekennzeichnet, dass** es die Stufen umfasst, die im

   - Herstellen des einen makromolekularen Bestandteil umfassenden Einkomponentenprodukts,
   - gegebenenfalls unter Luftausschluss Lagern des Einkomponentenprodukts,
   - Vermischen dieses Produkts mit einem Druckgas, um ein extrudierbares Material zu bilden,
   - Extrudieren einer Menge des extrudierbaren Materials und
   - Vernetzen des extrudierten Materials in einer feuchten Atmosphäre

bestehen.


### Claims

1. Flexible cellular material having an expanded polymer matrix, obtained by extruding a single-component product containing a macromolecular constituent in the presence of pressurised gas, **characterised in that** the macromolecular constituent is a polyurethane prepolymer with isocyanate or trialkoxysilyl end groups, self cross-linking under moisture.

2. Cellular material according to Claim 1, **characterised in that** it has a density less than or equal to 260 kg/m$^3$, in particular 200 kg/m$^3$.

3. Cellular material according to Claim 1 or 2, **characterised in that** it has a retained deformation after compression of less than 25%.

4. Cellular material according to any one of Claims 1 to 3, **characterised in that** it has a cellular structure in which the cells have a dimension of less than 0.3 mm, preferably less than 0.2 mm, in particular with a non-zero proportion of cells with a size less than 0.1 mm.

5. Cellular material according to any one of Claims 1 to 4, **characterised in that** the prepolymer is essentially single phase.

6. Cellular material according to Claim 5, **characterised in that** the prepolymer is a homopolymer.

7. Cellular material according to Claim 5, **characterised in that** the prepolymer is a statistical copolymer, a sequenced or grafted copolymer in which the various sequences are miscible with each other.

8. Cellular material according to any one of Claims 1 to 7, **characterised in that** the prepolymer is a non cross-linked oligomer obtained by reaction between:

> (i) at least one component chosen from amongst polyols and polyamines with a functionality of at least 2 having a skeleton of the polyester, polycaprolactone, polyether, polyolefin, polybutadiene, polyisoprene or polydimethylsiloxane type; and

> (ii) at least one polyisocyanate component with a functionality of at least 2 chosen from amongst para-phenylene diisocyanate, trans-1,4-cyclohexane diisocyanate, 3-isocyanate-methyl-3,3,5-trimethylcyclohexyl isocyanate, naphthalene-1,5 diisocyanate, methylene-bis 4 phenylisocyanate (pure MDI), raw MDI, 2,4-toluenediisocyanate (TDI 2,4), 2,6-toluenediisocyanate (TDI 2,6) and mixtures thereof, as well as raw TDI, and oligomers with isocyanate end groups.

9. Cellular material according to Claim 8, **characterised in that** the polyol and/or polyamine component has a molecular mass of less than or equal to 10,000, preferably around 500 to 4000 g/mol.

10. Cellular material according to Claim 8 or 9, **characterised in that** the prepolymer is obtained by the reaction of a single type of polyol or polyamine component with a polyisocyanate component with a non-oligomer skeleton.

11. Cellular material according to any one of Claims 8 to 10, **characterised in that** components (i) and (ii) react in an NCO/(OH+NH$_2$) molar ratio of around 2 to 3.5.

12. Cellular material according to any one of Claims 8 to 11, **characterised in that** the oligomer obtained by reaction between (i) and (ii) is modified by reaction with a trialkoxysilation agent.

13. Cellular material according to any one of the preceding claims, **characterised in that** the product also contains a particulate or powder filler, in particular calcium carbonate and/or carbon black.

14. Cellular material according to any one of the preceding claims, **characterised in that** it is in the form of a ribbon, plate, strand or tube for a seal.

15. Stable composition, able to be extruded in the presence of pressurised gas in order to form a flexible cellular material having an expanded polymer matrix, this composition containing a macromolecular constituent, **characterised in that** the macromolecular constituent is a polyurethane prepolymer with isocyanate or trialkoxysilyl end groups, self cross-linking under moisture.

16. Method of manufacturing a flexible cellular material according to any one of Claims 1 to 14, **characterised in that** it comprises the steps consisting of:

- preparing the single-component product containing a macromolecular constituent,

- possibly storing the single-component product away from moisture,

- mixing the product with a pressurised gas in order to form an extrudable material,

- extruding a quantity of extrudable material, and

- cross-linking the extruded material in a moist atmosphere.

FIG.1

FIG.2